Europäisches Patentamt

European Patent Office

Office européen des brevets

(11) Publication number: **0 322 106**
**A2**

(12) **EUROPEAN PATENT APPLICATION**

(21) Application number: 88310950.6

(51) Int. Cl.⁴ **G02F 1/133**

(22) Date of filing: 21.11.88

(30) Priority: 28.11.87 GB 8727903

(43) Date of publication of application:
28.06.89 Bulletin 89/26

(84) Designated Contracting States:
AT BE CH DE ES FR GB GR IT LI LU NL SE

(71) Applicant: THORN EMI plc
4 Tenterden Street
London W1A 2AY(GB)

(72) Inventor: Gibbons, David John
12 Edinburgh Close
Ickenham Uxbridge Middlesex(GB)
Inventor: Young, Rodney William
8 Park Crescent
Harrow Weald Middlesex, HA3 6EW(GB)

(74) Representative: Fleming, Ian Alexander et al
THORN EMI Patents Limited The Quadrangle
Westmount Centre Uxbridge Road
Hayes Middlesex, UB4 0HB(GB)

(54) Display device.

(57) A display device (2) comprises an arrangement of selectively operable colour-transmissive pixels transmissive of a first colour (10) and at least a second colour (6, 8) for effecting a colour display and means (22, 24) for addressing the pixels in response to a signal representing an image input to the display device (2). The arrangement comprises a plurality of adjacent groups of pixels in whch each group of pixels comprises more pixels of the first colour (10) than of a second colour (6, 8) so that the resolution of the first colour is greater than the resolution of the second colour. Because the eye is more tolerant of a lower resolution of certain colours, e.g. red or blue, than of other colours, e.g. green, it is possible to reduce the number of pixels of the certain colours and hence the number of individually addressable pixels for a given perceived resolution. Thus the construction of the display device is simplified.

FIG 1

## DISPLAY DEVICE

The present invention relates to a display device especially, but not solely, a liquid crystal display.

The present invention provides a display device comprising an arrangement of selectively operable colour-transmissive pixels transmissive of a first colour and at least a second colour for effecting a colour display and means for addressing the pixels in response to a signal representing an image input to the display device wherein the arrangement comprises a plurality of adjacent groups of pixels. each group of pixels comprising more pixels of said first colour than of said second colour so that the resolution of said first colour is greater than the resolution of said second colour.

For the avoidance of doubt, it is hereby stated that a pixel is a region of the display device that can be individually addressed.

The eye is more tolerant of a lower resolution of certain colours than of other colours, e.g. green. In particular, an observer is able to perceive far more detail in the green parts of a picture than in the red or blue parts. Accordingly, it is possible to reduce the number of pixels of certain colours, such as red or blue. and hence the number of pixels for a given perceived resolution. This also reduces the number of addressing means, including conducting lines in the display. Thus the construction of the display device is simplified.

Additionally, the invention has the advantages of increasing the open area of the display thereby improving its overall brightness and contrast for a given illumination. and of easing production problems by relaxing the resolution requirements from the photolithography steps for a given perceived picture sharpness.

In order that the invention may more readily be understood. a description is now given, by way of example only, reference being made to the accompanying drawings. in which:-

Figure 1 is an exploded view of part of a display device embodying the present invention;

Figures 2 and 3 are plan views of part of the colour filter arrangement of the display device of Figure 1: and

Figure 4, 5 and 6 are plan views indicating the connections to the colour filter arrangement of Figure 2.

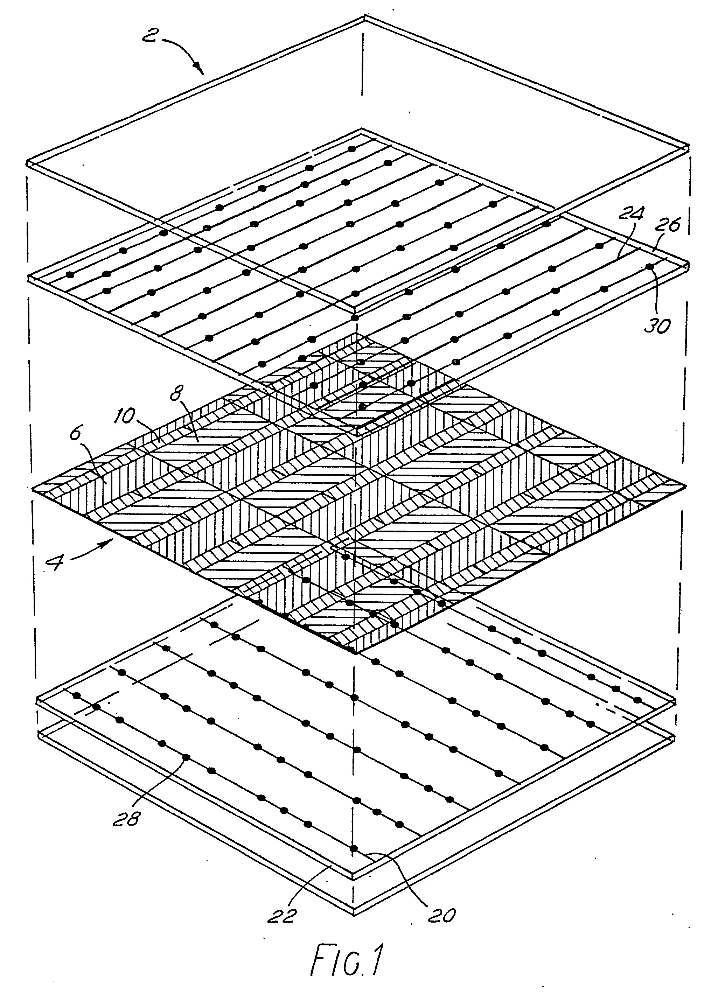

Figure 1 shows schematically a liquid crystal display device 2 embodying the present invention. The device comprises an arrangement of selectively operable colour-transmissive pixels comprising a plurality of adjacent groups of pixels transmissive of the colours red, blue and green. The arrangement of colour-transmissive pixels is formed by the combination of a colour filter arrangement 4 aligned with a plurality of light gates (not shown). The colour of each pixel is defined by the colour of a filter aligned with one or more light gates. Each light gate comprises liquid crystal material sandwiched between two transparent electrodes, a top or front electrode and a back electrode. In the device shown, the colour filter arrangement would be positioned between the liquid crystal material and one of the electrodes. Alternatively, the colour filter arrangement could be positioned external of the light gate structure.

It is assumed throughout this description that the light gates (or the light gates and their associated active driving elements) have an inherent memory for at least as long as the time between successive TV frames.

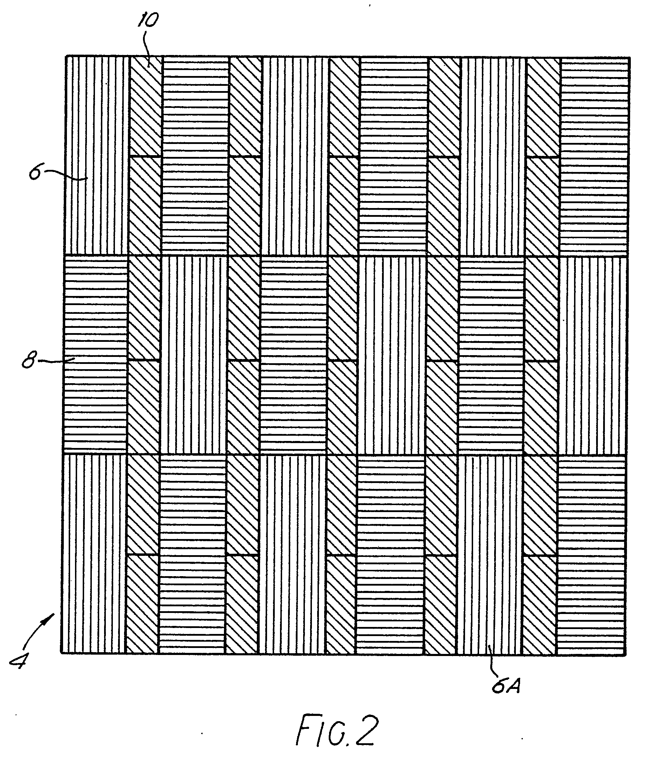

Figure 2 is a plan view of part of the colour filter arrangement 4 of Figure 1, and hence part of the arrangement of colour-transmissive pixels. The colour of each pixel is shown by the shading - vertical for red-transmissive pixels 6, horizontal for blue-transmissive pixels 8 and diagonal for green-transmissive pixels 10. As can be seen from the Figure, the arrangement of pixels can be divided into groups of adjacent pixels in which there are more green pixels 10 than red pixels 6 or blue pixels 8, i.e. the resolution of green pixels is greater than the resolution of red or blue pixels. The red pixels 6 and the blue pixels 8 have twice the linear dimension of, i.e. are twice as wide and twice as tall as, the green pixels 10.

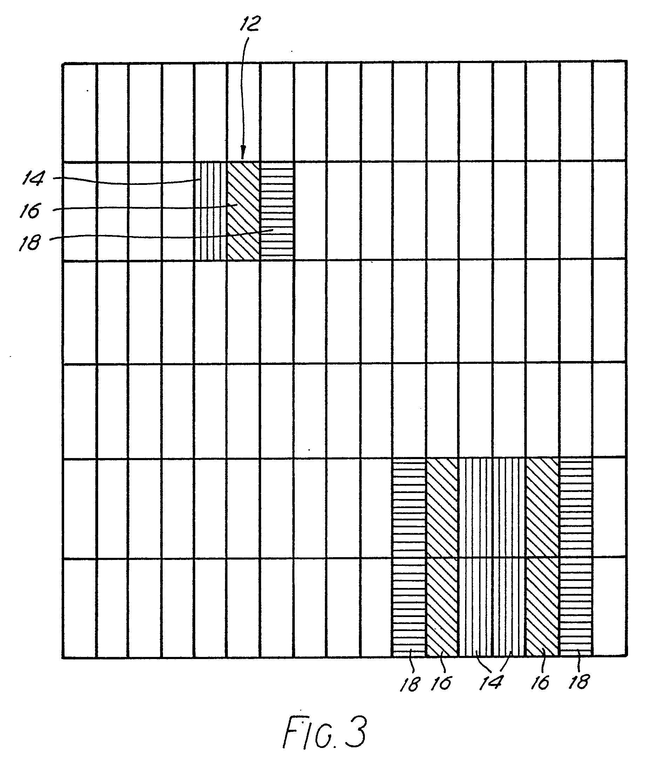

The formation of the colour filter arrangement 4 from a plurality of tricolour (i.e. multicolour) elements 12 is illustrated in Figure 3. (For clarity, not all the tricolour elements have been shaded in this Figure). Each tricolour element comprises a red element 14, a green element 16 and a blue element 18, which in this case are of approximately equal dimensions. In the right-hand corner of Figure 3 is shown four tricolour elements 12. These are arranged so that the red elements 14 of each tricolour element are adjacent each other. This group of red elements forms the red pixel 6A of Figure 2. The other red pixels 6 and the blue pixels 8 are formed in a similar fashion. Thus, the arrangement shown for the colour tesselation along one row is in sequence RRGBBG.. etc., the next line is BBGRRG.. etc., and so on.

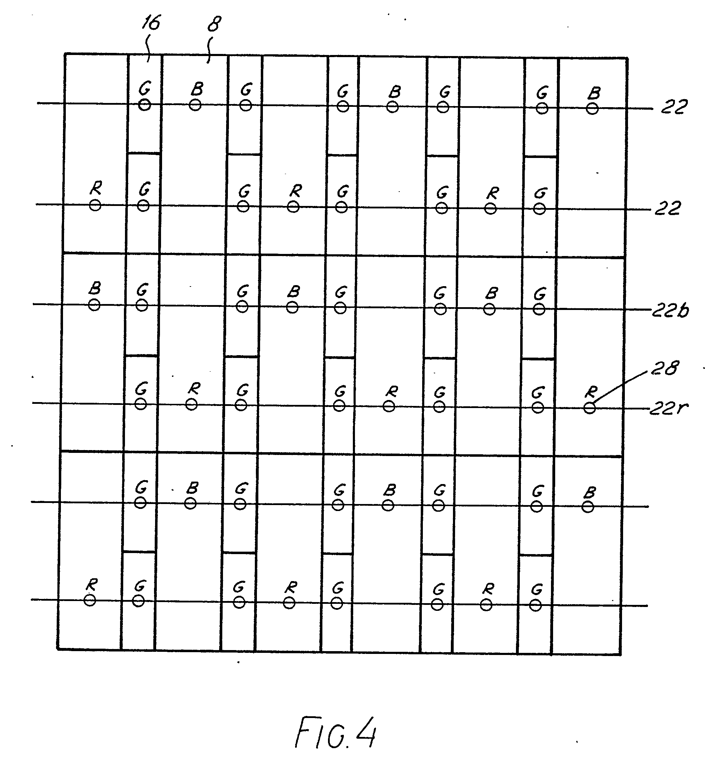

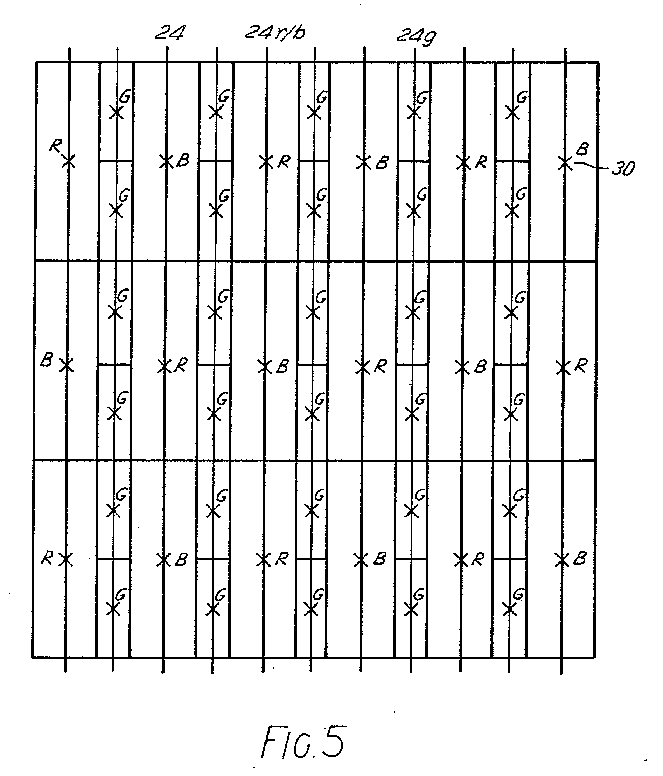

The pixels of the display are addressed in response to a signal representing an image input to the display device by a plurality of row and column conductors. Referring to Figure 1, the row conductors 20 for the row lines are supported by the back-plate 22 of the display panel and, at selected points on this conducting line, are joined to the back electrode of one of the LCD light gates (see Figure 4). In the case of an active matrix display, the conductors 22 are joined to the "write-enable" connection of a logic element. The column address conductors 24 (the 'data' or 'video' lines), which are supported on the front plate 26 of the device, are indicated in a similar way with connection shown to appropriate top electrodes of the LCD light gates (see Figure 5).

In Figure 4, the row address conductors 20 on the back plate are shown as horizontal lines with a circle indicating a connection 28 joining the conductor 20 to the back electrode of one or more light gates to produce a colour-transmissive pixel. The pixels have not been shaded for clarity and so the colour of the pixel to which a connection 28 is made is indicated by the letters R (for red), B (for blue), G (for green).

Each odd-numbered row conductor 22b is connected to the back electrode of each green pixel 10 of that row and to the back electrode for each of a number of groups of blue elements 18 forming blue pixels 8. Each pixel 8 corresponds to four blue elements 18, two in the odd row and two in an adjacent even row. Similarly, each even-numbered row conductor 22 is connected to the back electrode of all the green pixels 10 of that row, and to the back electrode for each of a number of groups of red elements 14 forming red pixels 6, each group corresponding to four red elements 14, two in the even row and two in an adjacent odd row.

In Figure 5 the column address conductors 24 on the front plate are shown as vertical lines with a cross indicating a connection 30 of the column conductor 24 to the front electrode of one or more light gates to produce a colour-transmissive pixel. The pixels have not been shaded for clarity and so the colour of the pixel to which a connection 30 is made is indicated by the letters R (for red), B (for blue), G (for green).

One set of column conductors 24g are connected to the front electrode for each of a number of green pixels 10. The other set of column conductors 24r/b are connected to the front electrode for each of a number of red pixels 6 and blue pixels 8. The column conductors 24r/b for the red/blue pixels 6, 8 are shown as thicker lines than the column conductors 24g for the green pixels 10 merely for the sake of clarity, and, in practice, these lines may or may not be of equal thickness.

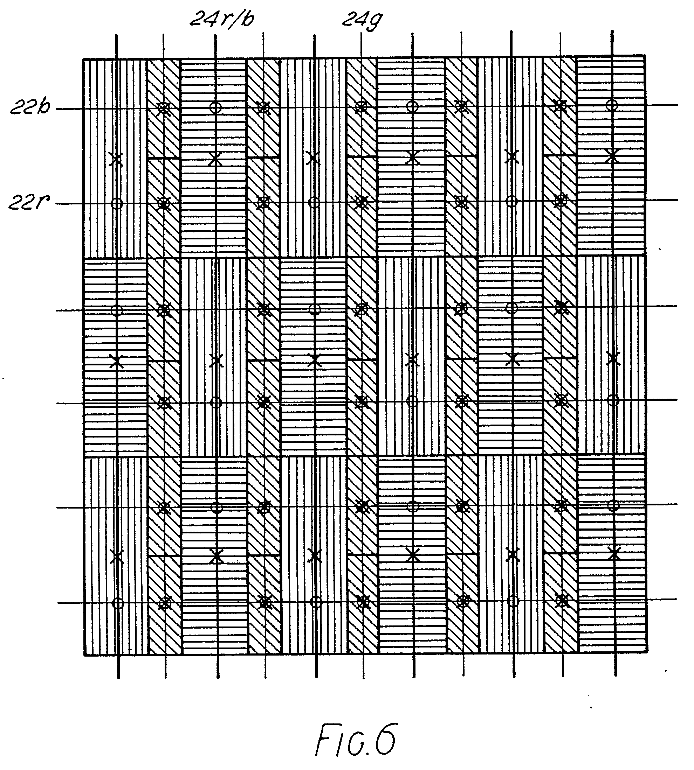

Figure 6 shows the overlap of the row and column conductors in relation to the red, green and blue pixels.

This arrangement allows the pixels to be addressed by a time-division multiplexed scheme with two fields. In an odd field, signals are sent along the odd row conductors 22b and so the green pixels on the odd rows are addressed together with the blue pixels formed by the blue elements of adjacent odd and even rows. Thus the blue elements of adjacent odd and even rows are written with the same information, namely the mean of the blue signal associated in the picture-generating equipment with the blue elements of the original odd and even rows.

Similarily, in an even field, signals are sent along the even row conductors 22 and so the green pixels on the even rows are addressed together with the red pixels formed by the red elements of adjacent odd and even rows. Thus the red elements of adjacent odd and even rows are written with the same information, namely the mean of the red signal associated in the picture-generating equipment with the red elements of the original odd and even rows.

The applied electrical video (red or blue) signals are time-division multiplexed so that on successive video lines a red or a blue signal is sent down a common column address conductor 24r/b. This arrangement enables the number of column conductors to be reduced since, referring to Figures 3 and 5, each red/blue column conductor 24r/b addresses pixels formed by groups of elements. Hence, the number of column address lines needed is only four per group of four tricolour elements. Thus the row lines are accessed sequentially, and the pixels on the line are written in parallel according to the logical arrangement of the colour dots (i.e. elements).

In the example shown, simplification of construction results, in that the number of separate pixels is reduced by a factor of 3, and the column address line spacing can be increased by 50%.

A similar arrangement of colour filters and light-gates can be used for any active matrix addressing scheme.

In a modification, the display has an arrangement of colour filters in which all the blue and all the red filters are vertically in line and parallel. An advantage of doing it this way is that it·is easier to manufacture.

## Claims

1. A display device comprising an arrangement of selectively operable colour-transmissive pixels transmissive of a first colour and at least a second colour for effecting a colour display and means for addressing the pixels in response to a signal representing an image input to the display device wherein the arrangement comprises a plurality of adjacent groups of pixels, each group of pixels comprising more pixels of said first colour than of said second colour so that the resolution of said first colour is greater than the resolution of said second colour.

2. A display device according to Claim 1 wherein the display device is a liquid crystal display device.

3. A display device according to any one of the preceding claims wherein the arrangement of colour-transmissive pixels is formed of a plurality of multicolour elements, each multicolour element consisting of an element of each of said first and said at least a second colour, and a pixel of said second colour is formed by a group of adjacent elements of said second colour whereby the group of adjacent elements share a common addressing means.

4. A display device according to Claim 3, the addressing means comprising an arrangement of row and column conductors appropriately connected to the pixels wherein each of the column conductors is connected to one of a plurality of pixels of said first colour or one of a plurality of pixels of said at least second colour.

5. A display device according to Claim 4 wherein a pixel of said second colour has a linear dimension twice that of a pixel of said first colour.

6. A display device according to Claim 5 wherein each row conductor is connected to a plurality of pixels of said first colour and also connected to a plurality of pixels of said at least second colour.

7. A display device according to any one of the preceding claims wherein said at least a second colour comprises a said second colour and a third colour and each group of pixels comprises more pixels of said first colour than of each of said second and third colours.

8. A display device according to Claim 7 dependent on Claim 6 wherein the addressing means includes means for time-division multiplexing the signal so that pixels of said second colour are addressed in one field and pixels of said third colour are addressed in another field.

9. A display device according to any one of the preceding claims wherein said first colour is green and said at least a second colour consists of the colours red and blue.

FIG.1

FIG.2

FIG.3

FIG.4

FIG.5

FIG.6